# FASCICULE DE BREVET EUROPEEN

(11) **EP 3 183 825 B1**
(45) Date de publication et mention de la délivrance du brevet: **17.02.2021**
(21) Numéro de dépôt: 15756128.3
(22) Date de dépôt: 13.08.2015
(51) Int. Cl.: H04B 7/185

(54) **PROCÉDÉ DE CRÉATION DE CARTES PAR TRAITEMENT ALÉATOIRE DE DONNÉES REÇUES DE CAPTEURS EN MOUVEMENT**
VERFAHREN ZUR ERZEUGUNG VON KARTEN DURCH ZUFALLSVERARBEITUNG VON DATEN AUS BEWEGLICHEN SENSOREN
METHOD FOR CREATING MAPS BY RANDOM PROCESSING OF DATA RECEIVED FROM MOVING SENSORS

(30) Priorité: 18.08.2014 FR 1457856
(43) Date de publication de la demande: 28.06.2017
(73) Titulaire: Antikidis, Jean-Pierre, 31320 Castanet (FR)
(72) Inventeur: Antikidis, Jean-Pierre, 31320 Castanet (FR)
(74) Mandataire: Office Freylinger
(86) Numéro de dépôt international: PCT/EP2015/068708
(87) Numéro de publication internationale: WO 2016/026773

(56) Documents cités:
- WO-A1-2010/037939
- WO-A1-2010/128295
- US-A- 5 187 754
- US-A1- 2006 077 096
- TEO Y M ET AL: "Distributed geo-rectification of satellite images using grid computing", PARALLEL AND DISTRIBUTED PROCESSING SYMPOSIUM, 2003. PROCEEDINGS. INTE RNATIONAL APRIL 22-26, 2003, PISCATAWAY, NJ, USA,IEEE, 22 avril 2003 (2003-04-22), pages 15-22, XP010645301, ISBN: 978-0-7695-1926-5
- Lina Khatib and John Gasch and Robert Morris and Steven Covington: "Local Search for Optimal Global Map Generation Using Mid-Decadal LandsatImages", NASA , 18 October 2011 (2011-10-18), Retrieved from the Internet: URL:http://web.archive.org/web/20111018180 056/https://ti.arc.nasa.gov/m/pub-archive/ 1333h/1333%20(Morris).pdf [retrieved on 2019-11-21]

## Description

L'invention concerne un procédé permettant de créer des cartes à partir de mesures récoltées par un ou une multitude de capteurs d'informations mobiles dont les informations ne sont pas centralisées comme on le fait classiquement, mais utilisent une méthodologie nouvelle par laquelle une carte est recomposée par la combinaison statistique de sous-cartes crées de façon aléatoire au sein d'un réseau de calculateurs informatiques. Des procédés connus de l'art antérieur peuvent être trouvés dans le brevet US5187754 ou bien encore ont été mis sur Internet par la NASA :
http://web.archive.org/web/20111018180056/https://ti.arc.nasa.gov/m/pub-archive/1333h/1333%20(Morris).pdf

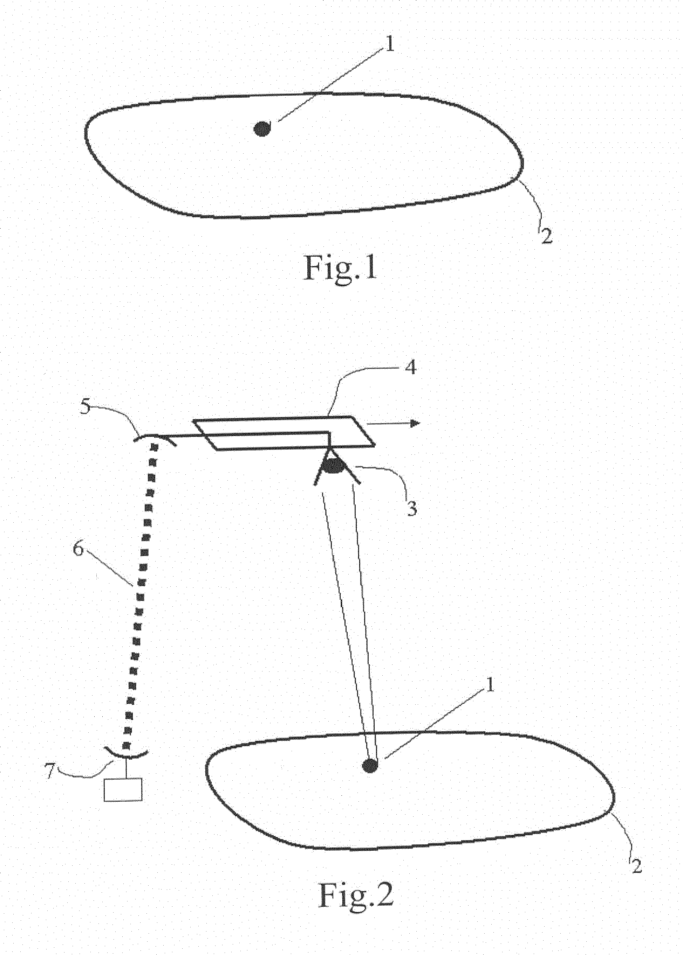

Un carte est une collections de points mesures (fig1) définie par un nombre de mesures quelconque associées à des coordonnées géographiques.

Dans le cas du présent brevet sera définie comme carte, la réunion de l'ensemble de mesures (données d'observation) ordonnées de façon à couvrir une zone géographique donnée ou bien encore une surface quelconque décrite par un ensemble de mesures référencées par des coordonnées spatiales allant de 1 à 3 dimensions.

Par exemple, une carte géographique conventionnelle est une série de mesures reportées sur une surface plane à deux dimensions (implique une procédure de projection d'un ensemble de mesures tridimensionnelles vers une surface plane, car la Terre n'est pas plate).

Dans le cadre de l'invention, on s'intéresse à la façon dont un ensemble de mesures collectées par des capteurs mobiles (personnes, véhicules, avions ou satellites) peut être rassemblée de la façon la plus efficace et la plus économique, en particulier lorsque la quantité de mesures collectées devient très importante et les capteurs mobiles dispersés sur une très grande zone.

Typiquement, par exemple si l'on s'intéresse à la cartographie du globe terrestre dans son ensemble et avec une grande rapidité de renouvellement, l'analyse du problème conduit à des impossibilités pratiques ou à des charges de traitement qui rendent la captation, par exemple de l'ensemble de la planète, impraticable dans l'état de l'art actuel.

Par ex : Une image couleur du globe à une résolution d'un échantillon de l'ordre de 33cm (qui est la résolution de beaucoup de systèmes de prises de vue aéroportés classiques) correspond à : 5,1 10E14 M2 soit environ 5x10E15 échantillons. En admettant que chacun des échantillons de mesure est codé en 3 couleurs de 256 niveaux chacun (codé sur 3 octets) ceci représente au total environ 1,5x10E16 octets à rafraîchir chaque jour, ce qu'aucun centre de calcul actuel ne sait traiter dans un temps ou/et un à un coût acceptable.

Une telle quantité de données est absolument ingérable par des moyens de calculs classiques. Non seulement par la grande quantité mise en jeux mais surtout par l'impossibilité de rapatrier cette information en un lieu donné, sachant qu'elle est acquise par des senseurs pouvant se déplacer sur l'ensemble de la planète pour certaines applications.

L'article de Y.M. Teo et al. intitulé "Distributed geo-rectification of satellite images using Grid computing" dans PARALLEL AND DISTRIBUTED PROCESSING SYMPOSIUM, 2003. PROCEEDINGS INTERNATIONAL, APRIL 22-26, 2003, PISCATAWAY, NJ, USA, IEEE, (2003-04-22), pages 15-22, XP010645301, ISBN: 978-0-7695-1926-5, décrit un exemple classique de l'application de traitements en parallèle dans un GRID, donc prédictible et déterministe.

Le procédé décrit dans cet article nécessite l'emploi de deux mécanismes distincts comportant un "créateur de tâche" (Task Generator) qui doit absolument détenir la connaissance exacte et déterministe du découpage crée (sous peine de ne pas pouvoir rassembler les informations) et un "rassembleur de donnés" (Result Collector) qui doit avoir une connaissance parfaite et déterministe des découpages réalisés par le Task Generator.

### DESCRIPTION DE L'INVENTION

L'invention concerne un procédé ainsi qu'un moyen de réalisation de ce procédé permettant, sans recours à des moyens coûteux de créer une carte issue d'une série de mesures extraordinairement élevée, pouvant être accédée et utilisée facilement par n'importe quel utilisateur pour créer toute carte à sa convenance.

La clef de ce procédé consiste à abandonner l'idée d'un processus de traitement déterministe et contrôlé tel qu'utilisé classiquement par la technique de mosaïque connue dans laquelle les données cartographiques reçues sont centralisées et additionnées pour fabriquer une carte, au profit d'une logique de création par accumulation statistique de "sous cartes" produites aléatoirement et dispersées à l'intérieur d'un réseau informatique mais dont la combinaison finit par produire le résultat recherché et sans qu'il soit besoin de savoir où et quand les sous cartes dites "aléatoires" sont produites.

Ce nouveau procédé objet de la présente invention s'avère particulièrement fécond dans la pratique car l'application du concept de "sous-cartes aléatoires" est particulièrement adapté aux nouveaux concepts informatiques actuels tels que systèmes informatiques distribués connus par l'état de l'art sous le nom de « nuages informatiques », en anglais « cloud » caractérisés par la mise en œuvre de réseaux informatiques raccordés entre eux et dont le fonctionnement ne dépend plus de la topologie informatique utilisée. Bien que la méthodologie proposée de création volontaire de sous-cartes aléatoires, afin de les traiter ensuite par une méthode de reconstruction également aléatoire puisse s'effectuer à l'aide de n'importe lequel système informatique, il s'avère que la combinaison de la méthodologie objet de la présente invention avec des moyens informatiques du type « Cloud » est particulièrement efficace pour gérer un ensemble dispersé de sous-cartes aléatoires crées par la méthodologie de l'invention.

Pour réaliser une carte à partir de capteurs mobiles, c'est à dire créer une représentation dans un espace bi ou tridimensionnel de mesures on associe classiquement les composantes suivantes:
- Un ensemble d'acquisition de l'information (généralement classique) avec un ou plusieurs capteurs coordonnés ou non entre eux apte à effectuer des mesures (généralement des données d'observation de la terre, en particulier des images) et communiquer le résultat sous forme d'un ensemble de la forme:
   M(x,y,z) M (1) étant conceptuellement un ensemble de mesure issues de capteurs .Un exemple typique concerne un avion porteur d'une caméra et prenant des photos du sol en couleur destinées à être combinées pour présenter la carte d'une ville ou d'un ensemble plus vaste qui pourrait être une région, un pays voire le globe terrestre dans son ensemble.

La carte peut être terrestre mais tout aussi bien non terrestre ou encore le résultat d'une observation radio-électrique. En général, une ou plusieurs plate-forme mobiles transportent le ou les capteurs en vue de couvrir une zone donnée (en fait permet de relier l'information temporelle à la position à travers l'équation trajectoire de la forme M(x,y,z)=f(t) avec M, valeur de la mesure destinée à former la carte désirée, x,y,z sont le coordonnées du point mesuré, t étant le temps de la mesure. - Un moyen d'émission permettant de transmettre vers un moyen de réception, plus ou moins continûment une liaison radiofréquence ou optique doté d'informations du capteur depuis sa plate-forme.
- Un ou des moyens de réception aptes à recueillir l'information recueillie par le(s) capteur(s) .

Conformément au présent procédé, on emploie un moyen de traitement de l'information éparse reçue par les stations, qui exploite selon la présente invention une méthodologie aléatoire nouvelle comprenant :
- Une couche de traitement aléatoire découpant en multiples sous-cartes aléatoires l'information éparse pouvant être issue de multiples capteurs embarqués sur de multiples plate-formes dispersés dans le temps et dans l'espace. Les sous-cartes aléatoires sont dispersées de façon quelconque dans la couche de traitement aléatoire, et des pointeurs d'accès sont associés aux sous cartes aléatoires pour permettre de retrouver les sous-cartes aléatoires.
- une couche organisatrice permettant l'accès aux sous cartes aléatoires ainsi traitées pour obtenir la carte finale désirée accessible comme un ensemble cohérent et parfaitement ordonnancé, en réalisant à l'aide des pointeurs d'accès la recombinaison statistique(110, 111) des sous-cartes aléatoires dispersées.

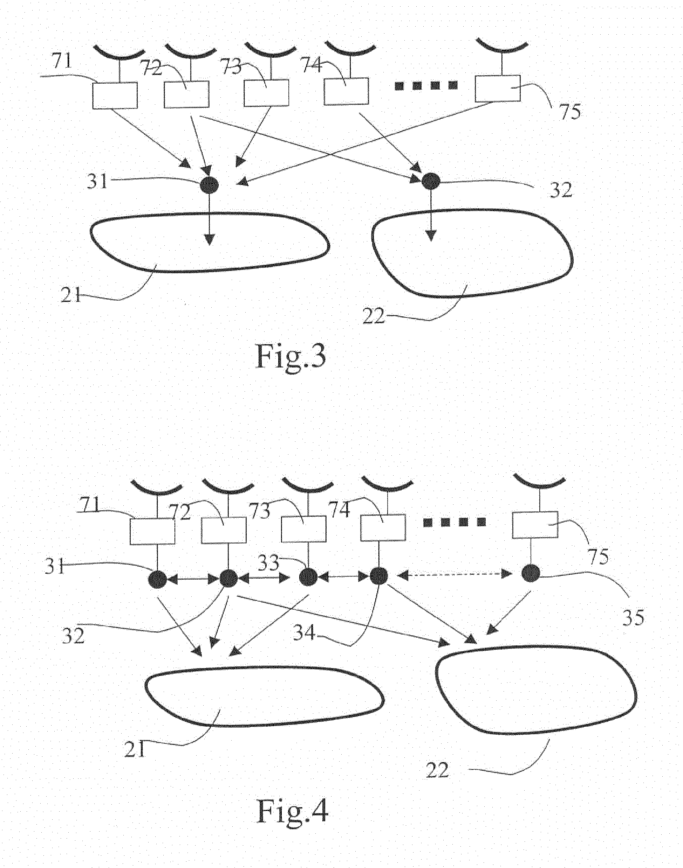

Les procédés existants utilisés à ce jour utilisent des configurations qu'on peut rappeler ci dessous avec:
- La topologie en "V" (fig 3) La concaténation des données reçues pour créer la carte souhaitée utilise une topologie de réception centralisée (on stocke les données à bord de la plate-forme et on les vide lorsqu'un système de réception est accessible)

Dans ce cas de figure les données sont "physiquement" rapatriée, ordonnancé dans un site central pour être ensuite accédé facilement par tout utilisateur
- Une variante de la topologie en "V" concerne l'utilisation de plusieurs moyens de réception (71,72,73,74,75) pouvant à recueillir en tout point de son parcours les mesures issues de la plate-forme mobile, puis en transmettre le résultat à un centre de traitement central (31) en charge de les réunir pour créer la carte désirée (21).

La topologie en "V", si elle est facile à mettre en œuvre, débouche sur d'énormes difficultés et des coûts de transmissions prohibitifs dés lors que les quantités de données et les distances deviennent importantes.

La concentration de l'information en un point et le besoin de tout rapatrier crée des difficultés insurmontables et empêche la réalisation de cartes couvrant un territoire important dans un laps de temps acceptable.

Une parade consiste à disperser l'information dans plusieurs centres de traitement (31,32) mais alors il devient très difficile de raccorder entre elles les cartes fragmentaires ainsi crées.

La poussée des besoins de la société de l'information à cartographier la planète entière conduit à des besoins en quantité d'information excédant les capacités des plus grands centres de traitements actuels. Une technologie en "V" demande une puissance locale coûteuse et des moyens de transmissions considérables

Pour contrer ces difficultés, ont été proposé des structures en "réseau" dite topologie en « X » (fig4) dans lesquelles un ensemble de systèmes de réception est organisé en maillage communiquant et ou chaque nœud du réseau est à la fois un nœud de réception couvrant une zone géographique lui correspondant associé à un système de traitement capable de créer la sous carte locale correspondante.

La création de la carte finale n'est plus centralisée, elle est obtenue par combinaison des informations disponible dans chaque centre (31,32,33,34,35) Cette structure réseau permet de ne pas concentrer la puissance, ni devoir rapatrier les données en un point unique et constitue une amélioration notable

Cependant le principe réseaux en « X » s'il est efficace, est rapidement confronté à de nouvelles limitations liées à la définition stricte des implantations de la géométrie des systèmes de réception qui doivent être organisés géométriquement pour se couvrir les uns les autres.

D'autre part chaque système de réception doit contenir un système de traitement puissant communiquant avec les autres systèmes, ce qui est coûteux dés lors que le nombre de systèmes de réception grandit.

Enfin et surtout il est impossible de déplacer une station de réception sans avoir à reconfigurer les autres stations pour couvrir complètement la carte à établir ou bien encore la perte d'un système de réception fait un trou de couverture empêchant l'accès à une zone géographique que le ou la multitude de capteurs mobiles aura pourtant couvert durant son déplacement.

La raison principale des limitations de la topologie en X provient du fait que les échanges sont déterministes avec chaque système étant incapable de se substituer à un autre et en cas de pertes rend la fabrication de la carte souhaitée parfois impossible.

Dans le cas de la présente invention, le problème posé est résolu par l'utilisation d'une méthode dans laquelle la récupération des données et leur mise en relation pour créer une carte s'effectue avec une efficacité bien plus élevée car utilisant un mécanisme dans lequel la captation de l'information, son traitement et son rassemblement s'effectue par un processus aléatoire statistique et pouvant sans difficulté utiliser des topologies de connections également non déterministe et aléatoires. Ce procédé permet de s'affranchir doublement des limites de la configuration en « X » sachant que l'implantation physique des moyens de réception peut être quelconque voire variable. Il en est de même pour les moyens de traitement qui n'ont plus à être localisé ou connecté aux moyens de réception de façon connue et stable

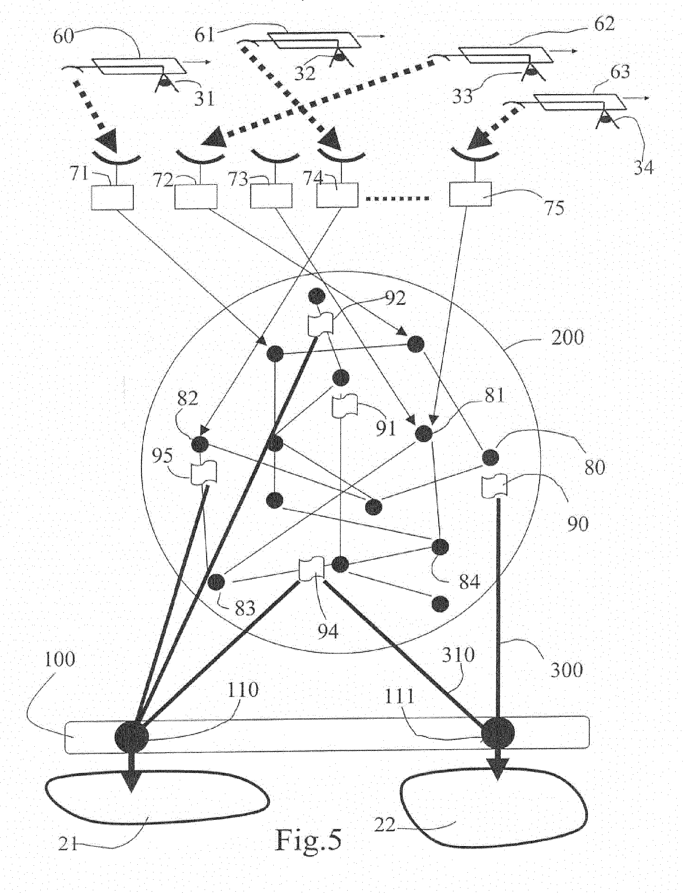

Le procédé de l'invention a été imaginé pour améliorer la performance des topologies en « X » combinée à la simplicité et la fiabilité de la topologie en « V ». Il repose sur l'utilisation de topologies dites "aléatoires" pouvant utiliser la somme de deux topologies de fonctionnement chacune aléatoire : une organisation de systèmes de réception quelconque pouvant se combiner avec une organisation de calculateurs également raccordés de façon quelconque et fabriquant et hébergeant des sous-cartes de façon aléatoire (fig 5)

Dans le contexte de la présente invention "aléatoire" signifie que la topologie d'installation des moyens de traitement ou de communication n'est ni déterministe, ni connue. Ceci n'exclut pas que le système dit "aléatoire" puisse se comporter de façon connue.

Pour se faire les données reçues des senseurs depuis les plate-formes mobiles sont collectées par un ou une multitude de système de réception et transmises à une série de calculateurs interconnectés créant chacun ou par groupe des sous-cartes dite « aléatoire » couvrant des zones qui peuvent être de dimension variable voire très petite.

Par exemple, le ou les capteur(s) d'informations d'une ou une pluralité de plate-forme mobile(s) couvre de façon continue une certaine surface (qui peut être celle de la Terre) et transmet ses mesures au fur et à mesure vers les moyens de réception ; et la couche de traitement aléatoire crée, de manière aléatoire et au fur et à mesure que ces informations sont disponibles, des sous cartes aléatoires représentant des fractions de la surface couverte par le capteur durant son déplacement.

La multitude de ces sous-cartes distribuées aléatoirement dans le réseau au fur et à mesure de l'arrivée des données issues des capteurs mobiles peut alors être recombinée par cumul statistique pour créer toute carte désirée. Bien qu'il ne soit pas possible de savoir à quel moment la carte finale sera obtenue, le résultat est forcément acquis après un temps dépendant la performance informatique du réseau.

De façon très simple, le point essentiel de la présente invention est de transformer un ensemble de cartes plus ou moins fragmentées obtenues par des capteurs mobiles en un ensemble beaucoup plus importants de sous cartes aléatoires crées volontairement par redécoupage aléatoire volontaire des données (cartes/images) reçues afin de les disperser dans une couche de traitement aléatoire également distribuée. La taille des sous-cartes ainsi créées, bien qu'aléatoire et définie par la couche de traitement, est en principe très petite par rapport aux images reçues par la couche de traitement afin de permettre une dispersion maximum de l'information facilitant la reconstruction par combinaison aléatoire. (typiquement entre1/1000 et 1/10 000 000).

En pratique, les données reçues par moyens de réception et transmises à la couche aléatoire sont découpées/fragmentées en sous-cartes de dimensions variables pouvant contenir typiquement de 100 à 10 000 0000 points de mesure. En outre, le nombre de pointeurs décrivant les caractéristiques propres à chaque sous-carte, dont leur taille et leur position, peut être compris entre 10 et 1 000 000, le système comprenant donc autant de pointeurs que de sous-cartes, et les pointeurs étant employés en vue d'utiliser les sous-cartes sans avoir besoin de la reconstruire.

Le rassemblement vers une carte finale (la carte recherchée) cohérente et complète est assuré par le traitement dispersé des sous cartes aléatoires et dont le référencent et le repérage (et non pas le simple cumul des valeurs mesurées comme dans les méthodes classique de « lissage statistique ») permet une reconstruction sous forme virtuelle (par association des pointeurs des sous cartes aléatoires) ou réel si besoin est (par rapatriement des sous cartes à l'aide des pointeurs crées lors de la phase de traitement).

L'analogie intellectuelle avec la thermodynamique ou bien les constructions cristallographiques ou des processus aléatoires génèrent des effets déterministes, ou bien encore les principes de calculs basés sur la méthode de Monte-Carlo est à signaler.

Les conséquences d'un tel mode de fonctionnement original sont extrêmement intéressants avec :
- La disparition, contrairement aux configurations existantes connue en « V » ou « X » des contraintes d'emplacement des moyens de réception
- Une utilisation des bandes passantes de transmission plus efficace car partageables sur un nombre quelconque système de réception (et non plus déterminé par la géométrie de leur couverture)
- la disparition de l'obligation de faire des traitements au niveau de la couche de réception ce qui rend particulièrement économique la en place des susdits moyens de réception.
- enfin à travers la création des sous-cartes aléatoires, tel que proposé par le procédé de l'invention, de façon systématiques et automatiques,. Il suffit d'attendre par simple effet de combinaison statistique la ou les cartes demandées.

Le fait de distribuer de façon aléatoire la charge de fabrication des sous cartes permet de démultiplier à l'infini la puissance nécessaire à l'établissement de la carte finale souhaitée. Il n'est pas non plus nécessaire de contrôler les processus de traitement car il sont effectués de façon automatique, parcellaire et autonome à l'intérieur de la couche de traitement. Dans le cas de l'invention le processus de création de carte s'effectue sans besoin de contrôle particulier, la seule contrepartie étant que le temps de réalisation de l'ensemble des sous-cartes n'est plus prédictible car dépendant uniquement de la statistique de performance de la couche de traitement aléatoire. Par contre en attendant le temps nécessaire, on est toujours assuré de bien recueillir la carte désirée, dés lors que les plates-formes et leurs capteurs ont bien acquis les mesures nécessaires à la création de la carte recherchée.

Une implémentations particulièrement efficace de l'invention concerne la création de globes cartographique virtuels combinant une topologie d'antennes de réception distribués de façon aléatoire (ou du moins sans contrainte de localisation particulière) combinée avec l'ingestion des flux reçus dans un système dit "Cloud" connus de l'état de l'art informatique ou se précisément la disposition et l'organisation des moyens informatiques utilisés n'est pas réputée connue.

Qui plus est dans ce cas, l'invention s'avère très puissante sachant que les utilisateurs de cartes n'ont même plus besoin de demander la fourniture des cartes sous forme "physique" car ils peuvent les exploiter pour leurs besoins également à l'intérieur du système dit "Cloud".

Suivant une autre réalisation du procédé de l'invention on dispose de la possibilité de cumuler les sous-cartes aléatoires issues de plusieurs systèmes mobiles portant des capteurs de nature différentes afin de créer une carte finale les combinant . Ce problème difficile dans le cas des méthodes déterministes connues est résolu de façon simple et élégante en laissant les sous-cartes s'accumuler de façon stochastique et se recouvrant les unes aux autres. Par exemple des capteurs optiques sur certains systèmes mobiles et des capteur de mesure radar sur d'autre mobiles distincts. Ceci permet de réaliser de façon quasi automatique des cartes combinant les deux type de mesures en une carte unique..

Ainsi, selon les variantes, la présente invention peut comprendre une ou plusieurs des caractéristiques suivantes:
- la couche organisatrice cumule les sous-cartes aléatoires par composition statistique continue afin de permettre l'utilisation de moyens informatiques dispersés, et dont la topologie de raccordements n'est pas réputée connue;
- on utilise le cumul stochastique des sous-cartes aléatoire pour améliorer la carte finale, soit en moyennant les sous-cartes aléatoires, soit en sélectionnant les plus fraîches ou celles dépourvues de nuages;
- les capteurs d'information sont constitués de capteurs optiques ou radiofréquence passifs (radiomètres) ou actifs (radar);
- les moyens de réception sont distribués à l'échelle de la Terre afin de créer une carte couvrant l'entièreté ou une fraction notable du globe terrestre;
- les capteurs d'informations effectuent des mesures à but scientifique destinées à créer des cartes à 2, 3 ou plus dimensions.

On notera avec intérêt que le présent procédé diffère de façon fondamentale des méthodes classiques de parallélisation de traitements liées à l'état de l'art connu depuis plus de vingt ans et concernant l'utilisation de systèmes informatiques opérant à l'aide de sous-machines travaillant en parallèle mais de façon déterministe, c'est-à-dire suivant les règle connues sous l'intitulé « machine de Turing ».

Le mode de traitement parallélisé consiste à découper la tache demandée en sous-taches déterministes confiées chacune à une machine de Turing opérant de façon autonome. En fin de traitement les résultats de chacune des machines de Turing sont rassemblés en un résultat convenable.

La présente invention met en œuvre une nouvelle approche bien, plus puissante, qui utilise les propriétés mathématiques des méthodes aléatoires dite de Monte-Carlo, permettant de traiter en parallèle des données crées de façon aléatoire (donc sans besoin, comme dans la parallélisation classique, de connaître de façon déterministe ou centralisée les machines de Turing créées).

Cette approche "stochastique" est particulièrement originale et puissante car elle permet de traiter des quantités massives d'informations sans avoir à décrire chacun des processus contribuant au résultat final.

C'est le cas de systèmes complexes et distribués ne pouvant, pour des raisons physiques ou temporelles, décrire de façon déterministe les paquets de données contribuant à la paralélisation des traitements.

Ce procédé s'applique particulièrement bien aux systèmes spatiaux complexes et distribués dans lesquels les données sont éparpillées et ingérées par des systèmes dont la topologie ou bien le mode de fonctionnement asynchrone ne permet pas de savoir quand et comment est organisé le découpage spatial ou temporel des paquets d'information reçus.

Par effet cumulatif et uniquement stochastique le résultat se crée de façon autonome (et sans contrainte de temps) sachant que chacun des paquets d'information transporte avec lui sa propre description.

Selon un autre aspect, l'invention concerne également un système et un programme configurés pour mettre en œuvre la méthode présentée ci-avant.

### DESCRIPTION A L'AIDE DES FIGURES

D'autres caractéristiques et avantages de l'invention apparaîtront à la lecture de la description détaillée qui suit pour la compréhension de laquelle on se reportera aux dessins annexés dans lesquels est présenté l'état de l'art actuel (figure 1,2,3 & 4) ainsi qu'une représentation d'un mode de réalisation de l'invention (figure 5)
La figure 1 montre le principe la fabrication d'une carte (2) à partir de la collecte de mesures (1) organisées sur une surface définie par un ensemble de coordonnées pouvant avoir de 1 à n dimensions. La plus courante étant la dimension 2 (carte plane)
La figure 2 montre le principe d'acquisition de cartes à l'aide d'une plate-forme mobile (4) véhiculant un capteur (3) et retransmettant par un émetteur radiofréquence (5) les mesures du susdit capteur vers un ou une pluralité de moyens de réception radio-fréquence (7)
la figure 3 décrit l'état de l'art avec un exemple de création d'une carte par reconstruction additive directe des mesures, utilisant une topologie déterministe en « V » dans laquelle la pluralité des moyens de réception (71,72,73,74,75) centralisent leur information vers un nombre limité de moyens de traitement (31,32), le plus souvent inférieur à 10 créant les cartes désirées(21, 22).
la figure 4 décrit l'état de l'art avec un exemple de création d'une carte par reconstruction additive distribuée en réseau (topologie déterministe en « X » dans laquelle la pluralité de moyens de réception (71,72,73,74,75) échangent entre eux les informations reçues suivant un maillage de moyens de traitement (31,32,33,34,35) distribué géographiquement afin de couvrir le total de la carte désirée (21,22)
La figure 5 décrit une réalisation du procédé de l'invention utilisant une topologie de création de sous-cartes aléatoires. L'ensemble des mesures recueillies par les senseurs disposés sur les plates-formes (60, 61, 62, 63) est transmis à n'importe lequel des systèmes de réception radiofréquence (71, 72, 73, 74, 75) qui à leur tour le communiquent à un ou plusieurs calculateurs (80, 81, 82, 83, 84) composants un systèmes de traitement distribué (200) créant continûment et aléatoirement les sous-cartes (90, 91, 92, 93, 94, 95) dispersées dans le susdit système de traitement.

Les sous-cartes distribuées dans le système sont repérables par des pointeurs informatiques sachant qu' au moment de leur création est également produit les informations (300, 310) nécessaires à leur recombinaison statistique ultérieure par la couche d'intégration(100) accumulant les informations d'accès (dits aussi pointeurs d'accès) (110,111) aux sous-cartes aléatoires au fur et à mesure qu'elles sont créées. Les pointeurs d'accès sont des valeurs numériques simples permettant de savoir où se trouvent physiquement les sous cartes aléatoires et leurs géométries. La reconstruction d'une carte finale n'oblige donc pas forcément à extraire le contenu des sous-cartes aléatoires et peut éventuellement se limiter à collationner un jeu de pointeurs permettant de retrouver la carte. Ce procédé s'avère particulièrement efficace dans le cas des systèmes basés internet où ce mode de fonctionnement à base de pointeurs (langage html par ex) est très courant.

L'invention peut donc se résumer en tant que procédé pour créer des cartes utilisant de façon classique un ou une pluralité de capteurs d'information (3), les susdits capteurs étant placés sur des plates-formes mobiles (60,61,62,63) se déplaçant en vue de recueillir les mesures nécessaires à la création de les susdites cartes associé à l'utilisation de moyens de réception (71, 72, 73, 74, 75) des informations/données (données d'observation) issues des capteurs mobiles et caractérisé par l'utilisation d'une méthodologie de traitement particulière objet du procédé de l'invention avec :
Des moyens de réception pouvant être disposés de façon aléatoire et autonomes les uns par rapport aux autres et transmettant les informations reçues à une couche de traitement informatique particulière dite « aléatoire » (200)
- la couche de traitement aléatoire (200), c'est à dire dont la topologie de raccordement des calculateurs la composant (80,81,82,83,84) est réputée variable et inconnue, crée, de façon dispersée et volontaire au fur et à mesure de la disponibilité des mesures dans le réseau de calculateurs, des "sous-carte dites "aléatoires" (90, 91, 92, 93, 94). Les sous-cartes aléatoires (dont la formulation est indépendante du capteur) sont dispersées de façon quelconque dans la couche de traitement aléatoire
une couche organisatrice (100) réalisant la reconstitution statistique de la ou les cartes recherchées (21,22) par utilisation des pointeurs (110, 111) des sous-cartes aléatoires,

Une réalisation du procédé de l'invention comprend donc:
- une série de capteurs transportés par des plates-formes mobiles embarquées sur des véhicules tels que voitures, moyens (plateformes) aéroportés ou spatiaux, notamment des satellites, dont le nombre peut typiquement être compris entre 2 et 1000 et envoyant chacune leurs mesures par ondes radio . Les capteurs peuvent avantageusement être constitués par des caméras de prise vue photographiques transmettant numériquement par voie hertzienne les photos obtenues au fur et à mesure de leur déplacement vers des stations de réception dont le nombre peut typiquement être compris entre 2 et 200.

Le procédé peut également s'appliquer à des capteurs optiques imageurs tels que des caméras numériques ou senseurs radio-fréquence passifs ou actifs destinés à observer tout zones d'observation y compris la surface terrestre.
- Des systèmes de réception distribués de façon aléatoire et pas forcément fixes. Ils sont positionnés pour profiter des meilleures conditions d'implantation possibles (par exemple environnement techniques ou humain). Dans une réalisation typique de l'invention les systèmes de réceptions peuvent être constitués par des bornes de réception radiofréquences dispersées le long d'une route ou bien encore dans le cas de capteurs aéroportés ou spatiaux par des antennes mobiles pointés vers la plate-forme hébergeant le ou la pluralité de capteurs de mesure.

Les systèmes de réception distribués de façon quelconque peuvent être aussi nombreux que nécessaire afin de diminuer les bandes passantes de transmission. (alors que dans la topologie en Y ou X, les bandes passantes ne sont pas partageables entre les systèmes de réception)

Pour profiter de cette disposition de réception aléatoire, les plates-formes mobiles elles même peuvent stocker très temporairement les informations captées afin d'attendre d'être à porté d'un des moyens de réception.

Une réalisation peut être envisagée utilisant des antennes de réception radiofréquence de diamètres adaptés à la quantité de données à recevoir qui conditionne la vitesse des informations transmises. Typiquement dans le cas de capteurs portés par des satellites en orbite basse, une antenne mobile de 2 mètres de diamètre pour recevoir 200 Mbit/s transmis depuis un satellite émettant 20 Watts radiofréquence à 600 km d'altitude est nécessaire.

Une couche de traitement dite "aléatoire" générant de façon asynchrone et dynamique des sous-cartes constituées par des ensembles de mesures disponibles localement à un instant donné par un des calculateurs la composant.

Dans le dispositif utilisant le procédé de l'invention, le susdit réseau de traitement, pouvant être partagé avec d'autres utilisateurs et son organisation physique n'est pas réputée connue ni stable (donc aléatoire). Au fur et à mesure de leurs disponibilités chaque élément constitutif du réseau va traiter les données issues d'une des quelconque station de réception.

Le premier moyen de traitement disponible crée en son sein une mini-mosaïque cartographique appelé "sous-carte aléatoire". L'endroit ou se situe ce stockage n'est pas non plus connu mais le moyen d'y accéder est néanmoins public. Cette sous carte n'est pas la résultante du procédé d'acquisition mais le résultat d'un découpage aléatoire intentionnel, caractéristique de l'invention.

L'ensemble de ces mosaïques est complètement dispersé au hasard (si ce n'est que chacun des systèmes publie de façon ouverte les clefs d'accès aux sous cartes aléatoires au fur et à mesure de leur réalisation.

Aucun système de traitement n'est associé à aucun moyen de réception particulier, pas plus qu'associé à une couverture géographique donnée. En fait seule l'information de disponibilité de la « sous-carte » aléatoire est accessible et non pas les mesures qu'elles contiennent qui restent stockées de façon distribuée et diffuse dans l'ensemble du réseau aléatoire de traitement. Dans le cas d'une réalisation suivant l'invention, la couche de traitement est constitué par des ordinateurs reliés en réseaux sur un bus de données informatique. Les susdits ordinateurs étant connectés ou déconnectés de façon quelconque et pouvant être variable.

Le procédé de l'invention peut aussi utiliser un réseau de calculateurs reliés par Internet et partageant leurs ressources tel des systèmes informatiques connus selon l'état de l'art informatique sous le nom de « Cloud » ou bien « Nuages »

A un moment donné, le nombre de sous-cartes aléatoires ainsi crées peut typiquement être compris entre 10 et 100 000 000.
- Une couche organisatrice destinée à rassembler en cumulant les données de pointage repérant les informations éparses contenues dans les sous-cartes stockées de façon asynchrone les unes des autres dans la structure de traitement aléatoire du réseau de la couche de traitement. De cette façon on dispose alors des clefs de reconstruction nécessaire à la création d'une carte parfaite dés lors qu'on se donne le temps d'attendre que le système finisse par traiter l'ensemble des mesures provenant des moyens de réception. L'utilisation des pointeurs permet de pouvoir accéder à toute sous-carte sans nécessairement disposer de sa localisation informatique dans le système de traitement. Par exemple à travers un numéro de date de création et de la position géographique de la sous-carte aléatoire peu être utilisé comme une clef d'accès. Pour effectuer la reconstitution d'une carte finale, il suffit de donner une suite de chiffres décrivant les positions des contours de la carte désirée que l'on compare aux liste des pointeurs générés par la couche de traitement afin de sélectionner les sous-cartes aléatoires concernées que l'on peut rapatrier au fur et à mesure qu'elle sont traitées et disponible au sein du système de traitement.

Grâce à l'utilisation de sous-cartes aléatoires, il n'est pas nécessaire de connaître les emplacement et les caractéristiques de chaque sous-carte crée de façon aléatoire. Selon une des réalisations de l'invention il suffit de les combiner systématiquement pour obtenir dans un temps variable dépendant des performances du réseau, la carte recherchée.

A travers l'utilisation d'une couche organisatrice (100) réalisant par combinaison statistique(110 ,111) des sous cartes aléatoires tout se passe in fine comme si le résultat obtenu décrivait une carte parfaite composée des multiples "sous-cartes" initialement dispersées de façon aléatoire mais regroupées par le fait qu'on dispose à tout instant de leur référencement dans la structure de traitement distribué statistiquement, et par simple accumulation stochastique on peut fabriquer n'importe quelles cartes de façon automatique. Ce procédé permet de créer, contrairement aux méthodes déterministes utilisées actuellement dans les topologies « Y » ou « X », une carte donnée sans avoir à se soucier de la façon dont les sous-carte sont créées ou organisées entre elles.

En créant par re-découpage volontaire et de façon dispersée et au fur et à mesure de la disponibilité des mesures dans le réseau de calculateurs des sous-carte dites aléatoires, le résultat obtenu, bien qu'aléatoire est parfaitement efficace et recrée la carte désirée de façon forcément correcte mais dans un espace de temps non déterminé a l'avance car dépendant des performances du système de traitement distribué réputé inconnu.

La conséquence technologique est importante car le procédé de l'invention utilisant un cumul statistique est par concept tolérant vis à vis de la topologie des moyens informatiques utilisés qui peuvent varier à l'infini sans que le résultat final en soit affecté.

On peut considérer le présent procédé est une application nouvelle de concepts inspirées des méthodes mathématique connue de Monte-Carlo (dans laquelle au lieu de mesurer la réponse d'un système vis a vis d'une excitation connue on cumule la réponse du susdit système à une multitudes d'excitations aléatoires dont la combinaison donne le résultat) transposée de façon inattendue et inventive à une topologie de réception et de gestion de l'information utilisant des propriétés statistiques d'ensemble de « sous-cartes » aléatoires volontairement crées en vue d'être recombinées entre elles après traitement.

Dans le cas d'applications industrielles la méthodologie proposée dans la présente invention profite à fond des nouvelles technologies de l'information qui proposent à des coûts avantageux des services informatique distribués mais ou précisément les configurations de traitement réputées non connues.

Selon une réalisation de l'invention et de façon optionnelle le cumul stochastique des sous-cartes aléatoire peut être utilisé pour améliorer les mesures en moyennant ou sélectionnant les mesures les plus fraîches afin de créer continûment des cartes rafraîchies.

Cette caractéristique ne doit pas être confondue avec l'amélioration statistique d'une image prise par un capteur sur une même zone à diverses reprises. Dans le cas de l'invention la fabrication de sous cartes aléatoires crée des micro-cartes qui peuvent être cumulées de façon fine (par exemple traiter un trou dans un nuage) qu'aucun procédé classique ne pourra localiser.

Une autre procédé issu de l'invention permet d'améliorer les cartes produites afin de profiter continuellement des avantages liés au cumul statistique des sous-cartes. Un exemple concerne l'amélioration du rapport signal à bruit d'une série de sous-cartes redondantes par amélioration statistique (la racine carré du nombre de sous-cartes juxtaposées ou bien encore pour des applications de réalisation de cartes géographique ou bien encore l'élimination des nuages par simple processus d'élimination à la volée des sous-cartes contenant des mesures couvrant des zones nuageuses.

Le procédé objet de la présente invention autorise la création de façon rapide et pratique de systèmes de créations de cartes de larges zones pouvant s'étendre à la couverture totale ou partielle du globe terrestre en utilisant des informations issues de capteurs aéroportés ou spatiaux utilisés sans qu'il soit besoin de coordonner leurs mouvements. Par simple cumul des mesures et en utilisant des ressources informatiques distribuées créant des sous-cartes de façon aléatoire on peut automatiquement recréer n'importe quelle carte à la demande. Ceci est particulièrement intéressant dans la mesure ou un système comme Internet mets à disposition des moyens puissants mais dont personne ne connaît de façon prédictible l'implantation.

Dans ce contexte la présente invention s'avère particulièrement efficace lorsque mis en œuvre dans un système Internet virtuel et massivement puissant ainsi que proposé commercialement sous le nom de "Cloud" ou « Nuage ». Dans ce cas la mise en œuvre du procédé de l'invention permet de diminuer considérablement les coûts des systèmes de traitement cartographiques aéroportés ou spatiaux actuels.

Une autre disposition du procédé consiste à permettre la cohabitation de plusieurs systèmes de capteurs mobiles et qu'on cherche à utiliser pour la réalisation de cartes Dans cette version du procédé de l'invention les sous-cartes aléatoires sont issues de plusieurs systèmes de capteurs mobiles effectuant des mesures différentes que l'on souhaite combiner entre elles dans la carte finale à produire. En utilisant le processus de création de sous-cartes aléatoires, il suffit de faire un cumul statistiques des diverses sous cartes pour obtenir simplement une carte composite.

Avantageusement une application de l'invention à la fabrication d'une carte d'un continent, voire de la planète entière utilisant une couche de réception et de traitement distribuée à l'échelle du globe afin de créer par utilisation de sous cartes aléatoires une carte finale couvrant l'entièreté du globe terrestre.

Pour ce faire les capteurs d'informations d'une ou plusieurs plate-formes couvrent lors de leurs déplacements une surface donnée de la Terre et l'ensemble des informations correspondantes sont éclatées de manière aléatoire et au fur et à mesure de leur disponibilité en sous-cartes représentant des fractions variables de la surface ainsi couverte.

La couche de traitement aléatoire crée, de manière aléatoire et au fur et à mesure que ces informations sont disponibles, des sous cartes aléatoires représentant des fractions variables de la surface ainsi couverte.

Typiquement selon le procédé de l'invention la réalisation d'une telle carte au 1/100 000 à partir de données satellitaires à résolution métrique balayant typiquement l'ensemble de la terre en six mois peut se réaliser en moins d'une semaine. Soit environ 5 à 10 fois plus vite qu'avec les procédés actuellement utilisé dans l'état de l'art actuel où toutes les données nécessitent une centralisation et un raccordement des données reçues par les satellites entre elles très coûteux en temps de transmission et de manipulation.

## Revendications

1. Procédé pour créer des cartes, en particulier de la Terre, à partir de mesures issues d'un ou d'une pluralité de capteurs d'informations (31, 32, 33, 34), les susdits capteurs étant placés sur des plates-formes mobiles (60, 61, 62, 63) se déplaçant, **caractérisé en ce que** :
lesdites mesures issues des capteurs d'informations sont envoyées depuis les plates-formes mobiles vers des moyens de réception (71, 72, 73, 74, 75) disposés de façon aléatoire et autonome les uns par rapport aux autres et transmettant les informations reçues à une couche de traitement informatique particulière dite « aléatoire » ;
ladite couche de traitement aléatoire (200), c'est-à-dire dont la topologie de raccordement des calculateurs la composant (80, 81, 82, 83, 84) est réputée variable et inconnue, crée en son sein des sous-cartes dites « aléatoires » au fur et à mesure de la disponibilité des informations reçues par le réseau de calculateurs, lesdites sous-cartes aléatoires (90, 91, 92, 93, 94) étant dispersées de façon quelconque dans la couche de traitement aléatoire, des pointeurs d'accès étant associés aux sous cartes aléatoires pour permettre de les retrouver ;
une couche organisatrice (100) réalise à l'aide des pointeurs d'accès la recombinaison statistique(110, 111) des sous-cartes aléatoires dispersées dans la couche de traitement aléatoire en vue de reconstruire la ou les cartes finales recherchées (21, 22).

2. Procédé selon la revendication 1, **caractérisé en ce que** la couche organisatrice cumule les sous-cartes aléatoires par composition statistique continue afin de permettre l'utilisation de moyens informatiques dispersés, et dont la topologie de raccordements n'est pas réputée connue.

3. Procédé selon la revendication 1 ou 2, **caractérisé en ce qu'**on utilise le cumul stochastique des sous-cartes aléatoire pour améliorer la carte finale, soit en moyennant les sous-cartes aléatoires, soit en sélectionnant les plus fraîches ou celles dépourvues de nuages.

4. Procédé selon l'une quelconque des revendications précédentes, **caractérisé en ce que** le nombre de plates-formes mobiles est compris entre 2 et 1000, le nombre de moyens de réception compris entre 2 et 200, le nombre de sous-cartes aléatoires créées compris entre 10 et 100 000 000.

5. Procédé selon l'une quelconque des revendications précédentes, **caractérisé en ce que** la couche de traitement aléatoire est mise en œuvre dans un nuage informatique.

6. Procédé selon l'une quelconque des revendications précédentes, **caractérisé en ce que** le ou les capteurs d'informations d'une ou plusieurs plate-forme(s) couvrent lors de leur déplacement une surface donnée de la Terre et que l'ensemble des informations correspondantes sont éclatées de manière aléatoire et fur et à mesure de leur disponibilité en sous-cartes représentant des fractions variables de la surface ainsi couverte.

7. Procédé selon l'une quelconque des revendications précédentes, **caractérisé en ce qu'**on découpe de façon aléatoire les données reçues par les moyens de réception en sous-cartes de dimensions variables pouvant contenir de 100 à 10000 0000 points de mesure.

8. Procédé selon l'une quelconque des revendications précédentes, **caractérisé en ce que** le nombre de sous-cartes aléatoires est compris entre 10 et 1 000 000.

9. Procédé selon l'une quelconque des revendications précédentes, **caractérisé en ce que** les plateformes mobiles sont choisies parmi la liste comprenant : des véhicules terrestres, des plate-formes aéroportées ou et des plateformes spatiales, notamment des satellites.

10. Procédé selon l'une quelconque des revendications précédentes, **caractérisé en ce que** les capteurs d'information sont constitués de capteurs optiques ou radiofréquence passifs (radiomètres) ou actifs (radar).

11. Procédé selon l'une quelconque des revendications précédentes, **caractérisé en ce que** les sous-cartes aléatoires sont issues de plusieurs systèmes de capteurs d'information effectuant des mesures différentes que l'on souhaite combiner entre elles dans la carte finale à produire.

12. Procédé selon l'une quelconque des revendications précédentes, **caractérisé en ce que** les moyens de réception sont distribués à l'échelle de la Terre afin de créer une carte couvrant l'entièreté ou une fraction notable du globe terrestre.

13. Procédé selon l'une quelconque des revendications précédentes, **caractérisé en ce que** les capteurs d'informations effectuent des mesures à but scientifique destinées à créer des cartes à 2, 3 ou plus dimensions.

## Patentansprüche

1. Verfahren zum Erzeugen von Karten, insbesondere von der Erde, ausgehend von Messungen, die von einem oder einer Vielzahl von Informationssensoren (31, 32, 33, 34) stammen, wobei die Sensoren auf mobilen Plattformen (60, 61, 62, 63) angebracht sind, die sich fortbewegen, **dadurch gekennzeichnet, dass**:
die von den Informationssensoren stammenden Messungen von den Plattformen aus zu Empfangsmitteln (71, 72, 73, 74, 75) gesendet werden, die zufällig und relativ zueinander autonom angeordnet sind und die die empfangenen Informationen an eine spezielle, sogenannte "zufällige" Daten-Verarbeitungsschicht übertragen;
die zufällige Verarbeitungsschicht (200), deren Topologie also für die Anbindung der sie bildenden Rechner (80, 81, 82, 83, 84) als variabel und unbekannt angesehen wird, darin sogenannte "Zufalls"-Teilkarten erzeugt, und zwar je nach der Verfügbarkeit der vom Rechnernetz empfangenen Informationen, wobei die Zufalls-Teilkarten (90, 91, 92, 93, 94) in beliebiger Weise in der zufälligen Verarbeitungsschicht verstreut sind, wobei den Zufalls-Teilkarten Zugriffszeiger zugeordnet sind, um sie wieder auffinden zu können;
eine Organisationsschicht (100) mithilfe von Zugriffszeigern die statistische Wiedervereinigung (110, 111) der Zufalls-Teilkarten bewerkstelligt, die in der zufälligen Verarbeitungsschicht verstreut sind, um die gesuchte oder die gesuchten Endkarten (21, 22) zu rekonstruieren.

2. Verfahren nach Anspruch 1, **dadurch gekennzeichnet, dass** die Organisationsschicht die Zufalls-Teilkarten durch kontinuierliche statistische Zusammensetzung zusammenträgt, um die Nutzung der zerstreuten Informatikmittel zu ermöglichen, und deren Anbindungstopologie als nicht bekannt angesehen wird.

3. Verfahren nach Anspruch 1 oder 2, **dadurch gekennzeichnet, dass** man die zufällige Zusammenfassung der Teilkarten zum Verbessern der Endkarte verwendet, entweder durch Mittelwertbildung der Zufalls-Teilkarten oder durch Auswahl der frischesten oder jener ohne Wolken.

4. Verfahren nach einem der vorangehenden Ansprüche, **dadurch gekennzeichnet, dass** die Anzahl der mobilen Plattformen im Bereich von 2 bis 1000, die Anzahl der Empfangsmittel im Bereich von 2 bis 200 und die Anzahl der erzeugten Zufalls-Teilkarten im Bereich von 10 und 100 000 000 liegt.

5. Verfahren nach einem der vorangehenden Ansprüche, **dadurch gekennzeichnet, dass** die zufällige Verarbeitungsschicht in einer Datenwolke (Cloud) angewendet wird.

6. Verfahren nach einem der vorangehenden Ansprüche, **dadurch gekennzeichnet, dass** der oder die Informationssensoren einer oder mehrerer Plattformen während ihrer Fortbewegung eine gegebene Oberfläche der Erde abdecken und dass alle entsprechenden Informationen auf zufällige Weise und je nach ihrer Verfügbarkeit in Teilkarten, die variable Teile der so abgedeckten Oberfläche darstellen, aufgeteilt werden.

7. Verfahren nach einem der vorangehenden Ansprüche, **dadurch gekennzeichnet, dass** man die von den Empfangsmitteln empfangenen Daten auf zufällige Weise in Teilkarten mit variablen Dimensionen zerlegt, die 100 bis 100 000 000 Messpunkte enthalten können.

8. Verfahren nach einem der vorangehenden Ansprüche, **dadurch gekennzeichnet, dass** die Anzahl der Zufalls-Teilkarten im Bereich von 10 bis 1.000.000 liegt.

9. Verfahren nach einem der vorangehenden Ansprüche, **dadurch gekennzeichnet, dass** die mobilen Plattformen ausgewählt sind aus der Liste umfassend: Landfahrzeuge, Luftlandeplattformen und/oder Raumfahrtplattformen, insbesondere Satelliten.

10. Verfahren nach einem der vorangehenden Ansprüche, **dadurch gekennzeichnet, dass** die Informationssensoren aus optischen Sensoren oder passiven (Radiometer-) oder aktiven Radiofrequenz- (Radar-) Sensoren aufgebaut sind.

11. Verfahren nach einem der vorangehenden Ansprüche, **dadurch gekennzeichnet, dass** die Zufalls-Teilkarten von mehreren Informationssensorsystemen stammen, die unterschiedliche Messungen durchführen, die man in der zu erzeugenden Endkarte miteinander kombinieren möchte.

12. Verfahren nach einem der vorangehenden Ansprüche, **dadurch gekennzeichnet, dass** die Empfangsmittel über die Erde hinweg verteilt sind, um eine Karte zu erzeugen, die die Gesamtheit oder einen erheblichen Teil der Erdkugel abdeckt.

13. Verfahren nach einem der vorangehenden Ansprüche, **dadurch gekennzeichnet, dass** die Informationssensoren Messungen zu wissenschaftlichen Zwecken durchführen, die dafür bestimmt sind, Karten mit 2, 3 oder mehr Dimensionen erzeugen.

## Claims

1. A method for creating maps, in particular of the Earth, from measurements issuing from one or more information sensors (31, 32, 33, 34), said sensors being placed on moving mobile platforms (60, 61, 62, 63), **characterized in that**:
said measurements issuing from the information sensors are sent from the mobile platforms to receiving means (71, 72, 73, 74, 75) disposed randomly and autonomously with respect to one another and transmitting the received information to a particular so-called "random" computer processing layer;
said random processing layer (200), i.e. in which the connection topology of the computers (80, 81, 82, 83, 84) constituting it is deemed variable and unknown, creates within it so-called "random" submaps as and when information received by the network of computers is available, said random submaps (90, 91, 92, 93, 94) being dispersed in any manner in the random processing layer, access pointers being associated with the random submaps to enable them to be retrieved;
an organizing layer (100) uses the access pointers for statistical recombination (110, 111) of the random submaps dispersed in the random processing layer in order to reconstruct the required final map or maps (21, 22).

2. The method as claimed in claim 1, **characterized in that** the organising layer accumulates the random submaps by continuous statistical composition in order to enable the use of dispersed computer means, the connection topology of which is not deemed to be known.

3. The method as claimed in claim 1 or 2, **characterized in that** stochastic accumulation of the random submaps is employed to enhance the final map either by averaging the random submaps or by selecting the freshest or those free of clouds.

4. The method as claimed in any one of the preceding claims, **characterized in that** the number of mobile platforms is between 2 and 1,000 inclusive, the number of receiving means between 2 and 200 inclusive, the number of random submaps created between 10 and 100,000,000 inclusive.

5. The method as claimed in any one of the preceding claims, **characterized in that** the random processing layer is implemented by cloud computing.

6. The method as claimed in any one of the preceding claims, **characterized in that** the moving information sensor or sensors of one or more platforms cover(s) a given area of the Earth and all the corresponding information is burst randomly as and when available into submaps representing variable fractions of the area covered in this way.

7. The method as claimed in any one of the preceding claims, **characterized in that** the data received by the receiving means is randomly broken down into submaps with variable dimensions able to contain from 100 to 100,000,000 measuring points.

8. The method as claimed in any one of the preceding claims, **characterized in that** the number of random submaps is between 10 and 1,000,000 inclusive.

9. The method as claimed in any one of the preceding claims, **characterized in that** the mobile platforms are chosen from the list comprising: terrestrial vehicles, airborne and/or space platforms, namely satellites.

10. The method as claimed in any one of the preceding claims, **characterized in that** the information sensors consist of optical sensors or passive radio-frequency sensors (radiometers) or active radio-frequency sensors (radar).

11. The method as claimed in any one of the preceding claims, **characterized in that** the random submaps issue from a plurality of information sensor systems effecting different measurements to be combined with one another in the final map to be produced.

12. The method as claimed in any one of the preceding claims, **characterized in that** the receiving means are distributed worldwide in order to create a map covering the entirety of or a significant fraction of the terrestrial globe.

13. The method as claimed in any one of the preceding claims, **characterized in that** the information sensors effect scientific measurements intended to create maps in two, three or more dimensions.
